# EUROPÄISCHE PATENTSCHRIFT

(11) **EP 0 529 312 B1**
(45) Veröffentlichungstag und Bekanntmachung des Hinweises auf die Patenterteilung: **09.07.1997**
(21) Anmeldenummer: 92112627.2
(22) Anmeldetag: 23.07.1992
(51) Int. Cl.: D01H 4/22, D01H 4/50, F16K 7/07

(54) **Spinnereivorrichtung**
Spinning machine
Métier à filer

(30) Priorität: 08.08.1991 DE 4126282
(43) Veröffentlichungstag der Anmeldung: 03.03.1993
(73) Patentinhaber: Rieter Ingolstadt Spinnereimaschinenbau AG, 85055 Ingolstadt (DE)
(72) Erfinder: Haase, Manfred, W-8070 Ingolstadt (DE); Schneider, Gottfried, W-8070 Ingolstadt (DE)

(56) Entgegenhaltungen:
- EP-A- 0 416 349
- DE-C- 3 617 522
- DE-C- 3 726 531
- US-A- 4 195 810
- US-A- 4 256 130

## Beschreibung

Die Erfindung betrifft eine Spinnereivorrichtung, insbesondere eine Spinn- oder Spulvorrichtung mit einer Druckleitung und mit einem in der Druckleitung angeordneten Ventil zum Schalten des Drucks.

Es ist aus der DE 37 26 531 C1 bekannt, in einer Offenend-Spinnvorrichtung einen Spinnrotor über eine Saugleitung mit einer Unterdruckleitung zu verbinden und zur Freigabe und Abschaltung des Spinnunterdrucks in der Saugleitung ein Ventil anzuordnen. Das Ventil ist als Schlauchmembranventil ausgebildet. Die Freigabe und Abschaltung des Spinnunterdrucks geschieht mittels eines quer zu dem Ventil verschwenkbaren Klemmhebels. Es wird dabei mit einem Klemmende die Schlauchmembran gegen eine Wand des Ventils gedrückt. Durch das Abschalten des Spinnunterdrucks und das Einschalten einer Absaugung an der Faserbandauflösewalze gelangen die aus dem Faserband gelösten Fasern nicht in den Spinnrotor, sondern in die Absaugöffnung. Durch erneutes Öffnen des Ventils und Beendigung der Absaugung gelangen die Fasern wieder in den Spinnrotor. Diese Umlenkung des Faserstromes wird während des Fadenansetzvorganges zur Erreichung gleichmäßiger Fadenansetzer verwendet. Nachteilig bei der bekannten Vorrichtung ist die Öffnungscharakteristik des Ventils. Durch die Trägheit der zu bewegenden Bauteile öffnet sich das Ventil relativ langsam. Durch den allmählichen Anstieg des Spinnunterdrucks ist auch nur eine allmähliche Bereitstellung des maximalen Faserstromes möglich. Aufgrund der mechanischen Bauteile ist eine gleichbleibende Öffnungszeit über mehrere Öffnungszyklen und an verschiedenen Spinnvorrichtungen nicht immer gewährleistet. Außerdem ist ein hoher Platzbedarf nötig, um das Ventil über die Hebel anzusteuern.

Aufgabe der vorliegenden Erfindung ist es daher, ein Verfahren zum Anspinnen einer OE-Spinnvorrichtung mit einem Ventil zum Öffnen und Schließen einer Druckluftleitung zu schaffen, welches insbesondere den Öffnungsvorgang gleichbleibend schnell und mit geringer zeitlicher Toleranz durchführt.

Ausgehend von dem Verfahren gemäß DE-C-3 726 531 wird diese Aufgabe durch die Merkmale des kennzeichenden Teils des Anspruchs 1 gelöst. Pneumatische Ventile haben gegenüber mechanisch betätigten Ventilen den Vorteil, daß sie weniger abhängig sind vom Reibungsverhalten, wie dies bei Hebeln und Gelenken der mechanischen Ventile der Fall ist. Bei langen Luftleitungen der pneumatischen Ventile ist allerdings ein Schalten zu exakten Zeiten nicht mehr gewährleistet. Um exakte Öffnungszeiten des Ventils zu erhalten, ist erfindungsgemäß eine Schnellentlüftungsvorrichtung an dem Ventil angeordnet, so daß über große Öffnungen relativ geringe Luftmengen aus dem Ventil schnell entnommen werden können. Durch die kurzen Wege, welche die Luft bei der Öffnung des Ventils, bzw. bei dessen Entlüftung zurücklegen muß, sind bei einer Vielzahl von Öffnungsvorgängen diese mit einer geringen zeitlichen Abweichung voneinander sehr schnell durchführbar. In Spinnereivorrichtungen, insbesondere in Spinn- oder Spulvorrichtungen ist häufig wichtig zu exakten Zeitpunkten den Beginn oder das Ende eines Über- oder Unterdruckluftstromes festzulegen. Derartige Druckluftströmungen werden zum Steuern von Faser- und/oder Staubströmen oder Fadenbewegungen eingesetzt.

Wichtig ist bei dem Ventil insbesondere die exakte Öffnungszeit. Steht nur ein geringer Platz für den Einbau des Ventils zur Verfügung, so ist es vorteilhaft die Vorrichtung zur Betätigung des Ventils und die Vorrichtung zur Schnellentlüftung des Ventils örtlich voneinander getrennt anzuordnen. Die Vorrichtung zur Betätigung des Ventils kann damit an einem Ort angeordnet werden, an welchem genügend Platz zur Verfügung steht. Es ist außerdem möglich für mehrere Spinnereivorrichtungen, welche mit einem derartigen Ventil ausgestattet sind, nur eine Vorrichtung zur Betätigung des Ventils vorzusehen. Es wird dann die Vorrichtung zur Betätigung des Ventils jeweils dem Ventil nur dann zugestellt, wenn eine Betätigung unmittelbar bevorsteht.

Wird unmittelbar am Ventil eine Entlüftungsöffnung angeordnet, so ist die zu transportierende Luftmenge zur Entlüftung sehr gering. Auch sind die Wege, welche die Luft bei der Entlüftung zurücklegen muß sehr kurz. Durch Vorsehen großer Entlüftungsöffnungen wird das Ventil schnell entlüftet. Dadurch wird ein sehr schnelles Öffnen des Ventils gewährleistet.

In einer vorteilhaften Ausbildung wird die Entlüftungsöffnung bei Beaufschlagung des Ventils mit Druckluft selbständig verschlossen. Dadurch wird ein zusätzlicher konstruktiver Aufwand für die Öffnung und Schließung der Entlüftungsöffnung vermieden. Die Steuerung des Verschließens der Entlüftungsöffnung wird vorteilhafterweise über eine Topfmanschette durchgeführt, welche gleichzeitig zum Verschließen einer Druckleitung, über welche Druck dem Ventil zur Betätigung zugeführt wird, vorgesehen ist.

In einer vorteilhaften Ausbildung ist das Ventil ein Membranventil. Ein Membranventil hat den Vorteil, daß es ohne großen konstruktiven Aufwand durch Druck steuerbar ist. Wird das Membranventil als ein Schlauchquetschventil ausgebildet, bei welchem die Membran ein elastischer Schlauch ist, so hat dies den Vorteil, daß einerseits große Durchtrittsquerschnitte durch das Ventil ermöglicht werden und andererseits auch sehr schnelle Schließ- und Öffnungszeiten erzielt werden können.

Wird der Membranschlauch zwischen abdichtenden Klemmstellen eingespannt, so ist im Gegensatz zum nichtgespannten Schlauch eine erhöhte Rückstellkraft zur Rückkehr nach der Auslenkung in seine ursprüngliche Form gewährleistet. Durch einen den Membranschlauch umgebenden Druckraum in dem Ventil wird eine am gesamten Umfang des Membranschlauchs wirkende Druckbeaufschlagung erreicht. Damit ist wiederum eine schnelle Reaktionszeit des Ventils gewährleistet.

Der Membranschlauch weist vorteilhafterweise eine Elastizität auf, durch welche bei Druckerhöhung in dem Druckraum der Membranschlauch die Druckleitung dicht abschließt. Dazu muß sich die Innenseite des Membranschlauchs durch den anliegenden Druck in dem Druckraum fest aneinanderdrücken lassen, so daß die Druckleitung sicher verschlossen wird. Andererseits muß der Membranschlauch auch eine Elastizität aufweisen die gewährleistet, daß der Membranschlauch bei einer Druckreduzierung in dem ihn umgebenden Druckraum schnell in seine ursprüngliche Lage zurückkehrt und damit das Ventil wieder seine maximale Durchtrittsöffnung zur Verfügung stellt. Diese Anforderungen an die Elastizität des Membranschlauchs gelten auch für eine anders gestaltete Membran des Membranventils.

Derartige Ventile sind besonders vorteilhaft dann einsetzbar, wenn in der Druckleitung Unterdruck herrscht. Einerseits wird durch derartige Ventile in diesem Fall ein dichtes Verschließen gewährleistet, da der Unterdruck die Membran bei Verschließen unterstützt. Andererseits wird durch den anliegenden Unterdruck die Entlüftung des Ventils nicht unterstützt, sondern eher noch behindert. Die erfindungsgemäße Anordnung einer Schnellentlüftung des Ventils erleichtert die Entlüftung bei Unterdruck in der Druckleitung.

Vorteilhafterweise wird zur pneumatischen Betätigung des Ventils zwischen einer Überdruckquelle und dem Ventil ein Magnetventil angeordnet. Das Magnetventil ist über Signale ansteuerbar. Es ist jedoch auch möglich, über mechanische oder pneumatische Einrichtungen die Betätigung des Ventils durchzuführen. Dies erfordert allerdings einen höhern konstruktiven Aufwand.

Das Ventil wird vorteilhafterweise dadurch betätigt, daß Druckluft auf die von einem Druckraum abgewandten Seite einer Topfmanschette einwirkt. Dadurch wird die Topfmanschette gegen eine Entlüftungsöffnung gedrückt und verschließt diese dicht. Die Druckluft strömt an der Topfmanschette vorbei und füllt den Druckraum. Durch die Erhöhung des Drucks in dem Druckraum wird ein Verschlußelement entgegen einer Rückstellkraft ausgelenkt und verkleinert den Durchtrittsquerschnitt des Ventils solange, bis er vollständig verschlossen ist. Wird der zur Betätigung des Ventils angelegte Druck verringert, so entsteht ein Ungleichgewicht auf die Topfmanschette, wodurch sich die Topfmanschette in Richtung des niedrigeren Drucks bewegt und die Entlüftungsöffnung dadurch geöffnet wird. Die nunmehr geöffnete Entlüftungsöffnung bewirkt, daß der auf das Verschlußelement wirkende Druck schlagartig verringert wird und das Verschlußelement durch seine Rückstellkraft sehr schnell in seine ursprüngliche Stellung zurückkehren kann. Damit ist der maximale Durchtrittsquerschnitt des Ventils wieder hergestellt. Durch die schlagartige Öffnung der Entlüftung wird unabhängig vom Querschnitt der Zuleitung der Druckluft von einer Druckluftquelle zu dem Ventil ein großer Entlüftungsquerschnitt geschaffen, so daß das Ventil sehr schnell auf Umgebungsdruck gelangt.

Die Erhöhung und Reduzierung des Druckes der Druckluft wird vorteilhafterweise durch ein Magnetventil gesteuert, das beispielsweise auf Signale einer Wartungseinrichtung reagiert.

Ist das Verschlußelement eine Schlauchmembran, so wird das Ventil durch eine Faltenbildung dieser Schlauchmembran geschlossen. Je nach Elastizität am Umfang der Schlauchmembran kann festgelegt werden, wieviele Falten die Schlauchmembran bei ihrer Betätigung bilden soll. Als vorteilhaft hat sich erwiesen, daß die Schlauchmembran auf ihren Umfang gleiche Wandstärke und Elastizität aufweist, wodurch zwei Falten gebildet werden. Damit wird eine schnelle Reaktionszeit und ein dichtes Verschließen gewährleistet.

Das Ventil kann vorteilhafterweise in einer Offenend-Spinnvorrichtung beim Anspinnen eines Fadens angewendet werden. Es wird dabei vor dem Anspinnen eine Besaugung des Spinnrotors durch Verschließen der Unterdruckleitung durch das Ventil unterbrochen. Zum Anspinnen wird ein Fadenende in den Rotor eingeführt. Zeitlich abgestimmt mit der Einführung des Fadenendes in den Rotor wird die Besaugung des Rotors wieder aufgenommen. Ist das an der Spinnvorrichtung angeordnete Auflösenwalzengehäuse mit einer Absaugöffnung zum Abführen von Fasern während der Vorbereitung des Ansetzvorganges versehen, so wird vorteilhafterweise der Beginn der Besaugung des Rotors zeitlich abgestimmt mit dem Ende der Besaugung durch die Absaugöffnung in dem Auflösewalzengehäuse. Ist die Absaugöffnung zwischen Faserspeisekanal und Speisevorrichtung angeordnet, so wird vorteilhafterweise die Besaugung des Rotors gleichzeitig oder früher freigegeben als die Besaugung durch die Absaugöffnung in dem Auflösewalzengehäuse unterbrochen wird. Dadurch wird eine Wickelbildung an der Auflösewalze durch nicht abgeführte Fasern verhindert.

Die Erfindung wird nachstehend an Hand von Ausführungsbeispielen näher erläutert. Es zeigt
Figur 1 ein Ventil im Längsschnitt und
Figur 2 eine Offenend-Rotor-Spinnvorrichtung.

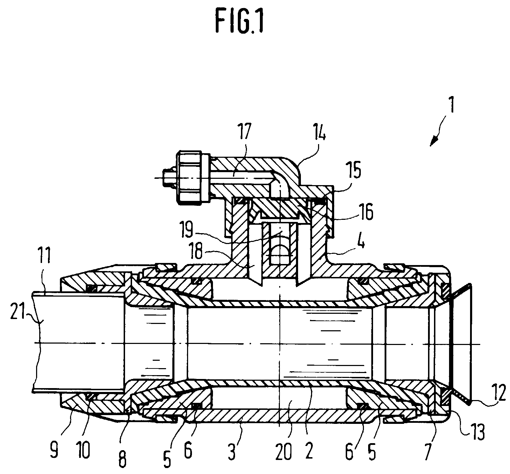

In Figur 1 ist ein Ventil 1 mit einem Druckrohr 3 und einer Schnellentlüftung 4 im Längsschnitt dargestellt. In dem Druckrohr 3 ist ein Membranschlauch 2 angeordnet. Er ist jeweils zwischen einem Konusring 5 und einem Stützring 7,8 geklemmt. Der Membranschlauch 2 wird vorgespannt zwischen den Einspannstellen montiert. Durch die eine Vorspannung des Membranschlauchs 2 wird eine schnelle und gleichmäßige Rückstellung des Membranschlauchs 2 beim Öffnen des Ventils 1 in seine dargestellte Normalstellung gewährleistet. Konusring 5, Membranschlauch 2 und Stützring 7, 8 werden mittels Endstück 9, 13 aufeinander gepreßt. Die Klemmung des Membranschlauchs 2 zwischen den Konusringen 5 und den Stützringen 7,8 dichtet zusammen mit O-Ringen 6, die zwischen den Konusringen 5 und dem Druckrohr 3 angeordnet sind, einen Druckraum 20 nach außen hin und gegen eine Druckleitung 21 ab.

Das dargestellte Ventil 1 ist ein Unterdruckventil, d.h., daß in der Druckleitung 21 Unterdruck herrscht. In dem Druckraum 20 dagegen herrscht, wenn das Ventil 1 betätigt wird, Überdruck, wodurch der Membranschlauch 2 zusammengedrückt und der Unterdruck in der Druckleitung 21 abgesperrt wird. Wegen des Überdrucks in dem Druckraum 20 sind an die Gestaltung der Flächen zwischen Konusring 5 und Membranschlauch 2 besondere Anforderungen zu stellen, damit der Druckraum 20 nach außen hin dicht ist. Hierzu sind die aneinanderliegenden Flächen stufenförmig gestaltet, wodurch ein sicheres Abdichten gewährleistet ist.

Stützring 8 und Endstück 9 sind dafür ausgelegt eine feste Verbindung des Ventils 1 zu einem Druckschlauch 11 zu schaffen. Hierzu ist Druckschlauch 11 in das Endstück 9 und den Stützring 8 gesteckt. Eine Abdichtung der Druckleitung 21 nach außen ist über einen O-Ring 10, der zwischen dem Druckschlauch 11 und dem Endstück 9 angeordnet ist, gewährleistet. Die Gestaltung des Stützringes 7 zusammen mit dem Endstück 13 und einer Dichtlippe 12 ist dafür vorgesehen eine lose Verbindung zu einem Anschluß des Ventils an einen zu besaugenden Raum zu schaffen. Eine derartige Verbindung ist vorteilhaft, wenn das Ventil und der zu besaugende Raum häufig, z.B. auf Grund von Wartungsarbeiten getrennt werden sollen.

Die Schnellentlüftung 4 ist unmittelbar an dem Druckrohr 3 angeordnet. Hierdurch wird in vorteilhafter Weise gewährleistet, daß bei der Entlüftung des Druckraums 20 geringste Mengen Luft bewegt werden müssen und somit eine Voraussetzung für ein über mehrere Öffnungsvorgänge hinweg gleichbleibend schnelles Öffnen des Ventils gewährleistet ist. Die Schnellentlüftung 4 ist mittels eines Deckels 14 und eines O-Rings 15 zur Abdichtung verschlossen. In dem Deckel 14 ist eine Druckleitung 17 angeordnet. In der Schnellentlüftung 4 ist ein Druckkanal 18 und eine Entlüftungsöffnung 19 angeordnet. Der Druckkanal 18 ist mit dem Druckraum 20 verbunden. Die Entlüftungsöffnung 19 ist über den Druckkanal 18 mit dem Druckraum 20 verbunden. Zwischen der Mündung der Druckleitung 17 in dem Deckel 14 einerseits und dem Druckkanal 18 und der Entlüftungsöffnung 19 andererseits ist eine Topfmanschette 16 angeordnet. Wird der Druckraum 20 aus der Druckleitung 17 mit Druckluft beaufschlagt, so strömt die Druckluft an der Topfmanschette 16 vorbei und verschließt die Entlüftungsöffnung 19, indem die Topfmanschette 16 mit einer Fläche gegen die Entlüftungsöffnung 19 gedrückt wird. Durch die Druckbeaufschlagung füllt sich der Druckraum 20 und dehnt den vorteilhafterweise aus Zellkautschuk bestehenden Membranschlauch 2 soweit, bis die Innenseiten des Membranschlauchs 2 aneinander gedrückt werden und das Ventil die Druckleitung 21 absperrt. Sobald der Druck in der Druckleitung 17 nachläßt, steigt der Druck auf der dem Druckkanal 18 zugewandten Seite der Topfmanschette 16, wodurch die Topfmanschette 16 schlagartig den Entlüftungskanal 19 öffnet und mit ihrer gegenüberliegenden Seite die Druckleitung 17 verschließt. Durch die Rückstellkraft des Membranschlauchs 2 in seine ursprüngliche Stellung wird die in dem Druckraum 20 befindliche Luft durch den Druckkanal 18 und die Entlüftungsöffnung 19 aus dem Ventil 1 gedrückt. Durch die Stellung der Dichtlippen der Topfmanschette 16 in Richtung auf den Druckkanal 18 wird gewährleistet, daß einerseits, wenn Druck aus der Druckleitung 17 in den Druckraum 20 strömt, diese Druckluft an der Topfmanschette 16 vorbei in den Druckraum 20 strömen kann. Andererseits wird bei Erhöhung des Drucks auf die dem Druckraum 20 zugewandten Seite der Topfmanschette 16 gewährleistet, daß sich die Topfmanschette 16 schnell in Richtung des niedrigeren Druckes auf der Seite der Druckleitung 17 bewegt und dadurch die Entlüftungsöffnung 19 schlagartig öffnet. Durch die geringe Luftmenge zwischen Topfmanschette 16 und dem Membranschlauch 2 ist sichergestellt, daß die Topfmanschette 16 nahezu ohne Verzögerung reagiert, da auf Grund der geringen Luftmenge und des anliegenden Drucks die Elastizität der Luft und deren Reibung an den Ventilwänden vernachlässigt werden kann. Mit einer derartigen Vorrichtung sind Öffnungszeiten des Ventils 1 von wenigen hundertstel Sekunden möglich. Die Öffnungszeiten sind auch über viele Schließ- und Öffnungszyklen hinweg und bei Ventilen des gleichen Typs gleichbleibend und ohne große Abweichungen.

Vorteilhaft bei der Vorrichtung gemäß Figur 1 ist, daß die Steuerung der Erhöhung oder Absenkung des Druckes in der Druckleitung 17 ortsunabhängig von dem Ventil 1 stattfinden kann. Dadurch ist eine kleine Bauweise des Ventils 1 gewährleistet. Es ist somit auch auf engstem Raum einsetzbar, da es kaum mehr Raum benötigt als der eigentliche Druckschlauch 11 beansprucht. Ein derartiges Ventil mit einer Schnellentlüftung ist besonders vorteilhaft, wenn in der Druckleitung 21 Unterdruck herrscht. In diesem Fall ist mit maßgebend für die Geschwindigkeit der Entlüftung des Druckraums 20 die Eigenelastizität und somit die Rückstellkraft des Membranschlauchs 2. Im Gegensatz zu einem Überdruck unterstützt der Unterdruck in dem Druckraum 21 nicht die Rückstellung des Membranschlauchs 2, sondern versucht sie eher noch zu hindern. Es ist daher besonders wichtig, daß der Membranschlauch 2 das hohe Bestreben hat, möglichst schnell in seine ursprüngliche Form zurückzukehren. Andererseits muß der Membranschlauch 2 so elastisch sein, daß sich seine Innenwände bei Füllung des Druckraums 20 dicht aneinander pressen und somit ein vollständiges Absperren der Druckleitung 21 gewährleisten. Als Material für den Membranschlauch 2 hat sich als besonders vorteilhaft ein Zellkautschuk mit einer Härte von etwa 70 shore erwiesen. Dieses erlaubt auch noch nach vielen Schließ- und Öffnungszeiten ein dichtes Verschließen und exakte Öffnungszeiten.

Anstelle eines Membranschlauchventils ist mit der gezeigten Schnellentlüftung auch ein anderes pneumatisches Ventil, beispielsweise ein pneumatisches Schieberventil ausrüstbar. Dabei wird der Schieber beispielsweise durch Federkraft in seiner Offenstellung gehalten und durch Druck in eine Schließstellung gebracht. Durch Nachlassen des Druckes und Entlüftung eines Druckraums in der beschriebenen Weise wird der Schieber durch Federkraft in seine Offenstellung zurückgeholt.

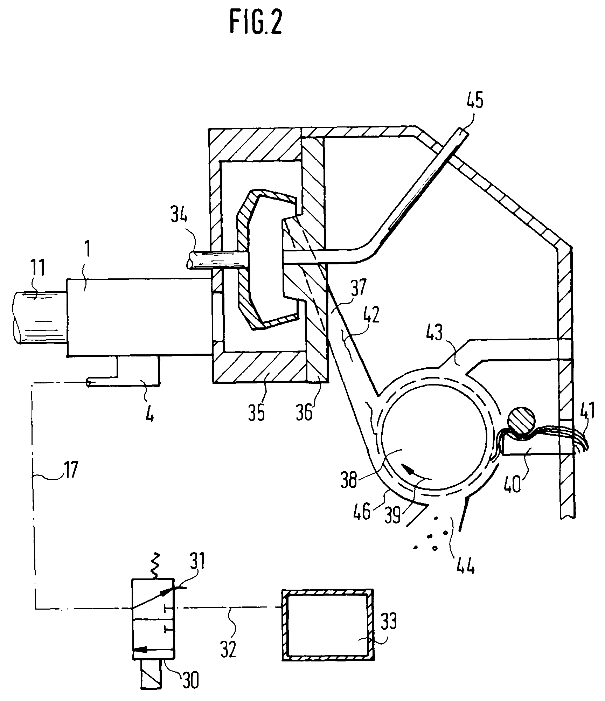

Eine Spinnvorrichtung, hier eine Offenend-Rotor-Spinnvorrichtung, mit einem Ventil 1 zeigt Figur 2. In einem Rotorgehäuse 35 ist ein Rotor 34 angeordnet. Das Rotorgehäuse 35 ist mittels eines Deckels 36, in dem ein Faserspeisekanal 37 und ein Fadenabzugsrohr 45 angeordnet sind, abgedeckt. An der Rückseite des Rotorgehäuses 35 ist das Ventil 1 mit dem Druckschlauch 11 angeordnet. Über den Druckschlauch 11 wird in dem Rotorgehäuse 35 bei geöffnetem Ventil 1 Unterdruck erzeugt. Das Öffnen und Schließen des Ventils 1 erfolgt über die Druckleitung 17. Die Druckleitung 17 ist über ein Magnetventil 30 und eine Druckleitung 32 mit einer Ringleitung 33 verbunden. Über die Ringleitung 33 wird eine Vielzahl von Spinnvorrichtungen mit Überdruck versorgt. Das Magnetventil 30 ist in der dargestellten Stellung auf Entlüftung 31 geschaltet. Dies bedeutet, daß aus dem Ringkanal 33 kein Überdruck entnommen wird. Druckleitung 17 weist Umgebungsdruck auf, wodurch das Ventil 1 geöffnet ist. Durch ein beispielsweise von einer Wartungsvorrichtung gegebenes Signal schaltet das Magnetventil 30, wodurch der Durchgang zwischen Druckleitung 32 und Druckleitung 17 geöffnet wird und Druckluft aus der Ringleitung 33 in die Druckleitung 17 strömt. Dadurch füllt sich der Druckraum 20 des Ventils 1 und verschließt die Druckleitung 11. Nach erneutem Signal schaltet das Magnetventil 30 wiederum in Entlüftungsstellung, wodurch der Druck in der Druckleitung 17 allmählich abnimmt. Durch die Schnellentlüftung 4 des Ventils 1 wird noch bevor die Druckleitung 17 vollständig auf Umgebungsdruck abgefallen ist, der Druckraum 20 schlagartig entleert und das Ventil 1 geöffnet. In dem Rotorgehäuse 35 wird dadurch wieder Unterdruck erzeugt.

Das Anspinnen der OE-Spinnvorrichtung erfolgt derart, daß Faserband 41 durch eine Speisevorrichtung 40 einer Auflösewalze 38 zugeführt wird. Die Auflösewalze 38 dreht sich in Richtung des Pfeiles 39 und löst dadurch einzelne Fasern 42 aus dem Faserband 41 heraus. Die Auflösewalze 38 ist in einem Auflösewalzengehäuse 46 angeordnet. In dem Auflösewalzengehäuse 46 ist in Drehrichtung auf die Speisevorrichtung 40 folgend eine Schmutzausscheidung 44 angeordnet. Im Anschluß daran folgt der Faserspeisekanal 37, durch den die Fasern 42 dem Spinnrotor 34 während des Spinnbetriebs zugeführt werden. In Drehrichtung dem Faserspeisekanal 32 folgend ist eine Absaugöffnung 43 angeordnet. Durch die Absaugöffnung 43 wird das Auflösewalzengehäuse 46 zeitweise während des Anspinnvorgangs besaugt. Dadurch wird bewirkt, daß die Fasern 42 nicht durch den Faserspeisekanal 37, sondern durch die Absaugöffnung 43 der Auflösewalze 38 entnommen werden. Diese Umlenkung des Faserstroms erfolgt jedoch nur solange der Faserspeisekanal 37 nicht über das Rotorgehäuse 35 und den Druckschlauch 11 besaugt wird. Das Ventil 1 ist daher in diesem Zustand im allgemeinen geschlossen.

Zum Anspinnen wird ein Fadenende durch das Fadenabzugsrohr dem Spinnrotor 34 zugeführt. Hierzu wird das Ventil 1 geöffnet, um das Fadenende durch den in dem Rotorgehäuse 35 herrschenden Unterdruck einzuziehen. Gleichzeitig werden die Fasern 42 durch den in dem Rotorgehäuse 35 herrschenden Unterdruck nicht mehr durch die Absaugöffnung 43, sondern durch den Faserspeisekanal 37 von der Auflösewalze 38 weggeführt. Die Besaugung der Absaugöffnung 43 kann sodann eingestellt werden. Die dem Spinnrotor 34 zugeführten Fasern 42 und das in den Spinnrotor 34 zurückgeführte Fadenende bilden beim Wiederabziehen des Fadens einen Ansetzer. Um einen guten und gleichmäßigen und bei jedem Ansetzvorgang gleichartigen Ansetzer zu gewährleisten, ist es wichtig, daß das Ventil 1 möglichst schnell und bei mehreren Ansetzvorgängen mit einer geringen zeitlichen Abweichung den vollen Unterdruck in dem Rotorgehäuse 35 zur Verfügung stellt. Dies wird durch das beschriebene Ventil 1 gewährleistet.

Wichtig für den gleichmäßigen Ansetzer ist auch, daß die Rückführung des Fadenendes und das Anliegen des Unterdrucks zeitlich aufeinander abgestimmt sind. Es ist deshalb erforderlich, daß die Ansprech- und Öffnungszeiten des Ventils 1 auch nach einer Vielzahl von Öffnungs- und Schließzyklen gleichbleibend sind.

Bei der dargestellten Vorrichtung ist die Absaugung der Fasern 42 durch die Absaugöffnung 43 derart zu steuern, daß sie nicht vor dem Beginn der Besaugung durch den Druckschlauch 11 unterbrochen werden darf, da es ansonsten zu einer Wickelbildung an der Auflösewalze 38 führt. Bei einer Anordnung der Absaugöffnung 43 in Drehrichtung der Auflösewalze 38 zwischen der Speisevorrichtung 40 und dem Faserspeisekanal 37 müßte eine zeitliche Abstimmung zwischen dem Öffnen des Ventils 1, der Rückführung des Fadenendes in den Spinnrotor 34 und der Abschaltung der Absaugung durch die Absaugöffnung 43 erfolgen, um die Fasern 42 zur geeigneten Zeit mit dem Fadenende in Verbindung zu bringen. Die Fasern 42 nehmen in diesem Fall erst dann den Weg in den Faserspeisekanal 37, wenn die Absaugung durch die Absaugöffnung 43 unterbrochen wird.

Bei einer Vielzahl von Spinnvorrichtungen ist es vorteilhaft, wenn das Magnetventil 30 oder eine andere, z.B. mechanische Schalteinrichtung in einer für mehrere Spinnvorrichtungen zuständigen Wartungseinrichtung angeordnet ist. Dadurch wird eine Kostenreduzierung erzielt, zumal das Schaltelement jeweils nur dann benötigt wird, wenn die Wartungseinrichtung an der jeweiligen Spinnvorrichtung zur Herstellung eines Fadenansetzers eingesetzt ist.

Das Ventil 1 mit der Schnellentlüftung ist nicht nur bei der dargestellten Offenend-Rotor-Spinnvorrichtung einsetzbar, sondern ebenso bei anderen Spinnereivorrichtungen, wie z.B. bei Friktionsspinnvorrichtungen, Luftspinnvorrichtungen oder Spulvorrichtungen, bei denen Unter- oder auch Überdruck zu genau festgelegten und reproduzierbaren Zeitpunkten zur Verfügung zu stehen hat.

## Patentansprüche

1. Verfahren zum Anspinnen einer Offenend-Spinnvorrichtung mit einem in einem Rotorgehäuse (35) angeordneten Rotor und einer ein Faserband (41) auflösenden Auflösewalze (38), die in einem Auflösewalzengehäuse (46) angeordnet ist und mit einer, mit dem Rotorgehäuse (35) in Verbindung stehenden Unterdruckleitung (21) mit einem Ventil (1), dadurch gekennzeichnet, daß vor dem Anspinnen eine Besaugung des Rotors dadurch unterbrochen wird, daß das Ventil (1) durch Druckerhöhung in einer das Ventil (1) steuernden Druckleitung pneumatisch geschlossen wird, daß danach ein Fadenende in den Rotor eingeführt und ein Faserband der Auflösewalze (38) zugeführt und die Fasern über eine Absaugöffnung aus dem Auflösewalzengehäuse (46) abgesaugt werden, daß zu einer vorbestimmten Zeit der Druck in der Druckleitung zumindest gering verringert wird und dadurch das Ventil (1) schlagartig geöffnet wird, und daß durch das Öffnen des Ventils (1) die Fasern schlagartig dem Rotor zugeführt werden, und daß die Druckverringerung in der Druckleitung zeitlich abgestimmt wird mit der Einführung des Fadenendes in den Rotor.

2. Verfahren nach Anspruch 1, dadurch gekennzeichnet, daß das schlagartige Öffnen des Ventils (1) dadurch erfolgt, daß das Ventil (1) über eine Schnellentlüftung entlüftet wird.

3. Verfahren nach Anspruch 1 oder 2, dadurch gekennzeichnet, daß der Beginn der Besaugung des Rotors zeitlich abgestimmt ist mit dem Ende der Besaugung durch die Absaugöffnung in dem Auflösewalzengehäuse (46).

4. Verfahren nach Anspruch 3, dadurch gekennzeichnet, daß die Besaugung des Rotors gleichzeitig oder früher freigegeben wird, als die Besaugung durch die Absaugöffnung in dem Auflösewalzengehäuse (46) unterbrochen wird.

## Claims

1. A method of joining in an open-end spinning device with a rotor arranged in a rotor housing (35) and a separating roller (38), which separates a sliver (41) and which is arranged in a separating-roller housing (46), and with an underpressure line (21) connected to the rotor housing (35) and having a valve (1), **characterized in that** before the joining the suction of the rotor is interrupted by the valve (1) being closed pneumatically by an increase in pressure in a compressed-air line which controls the valve (1), a thread end is then inserted into the rotor and a sliver is supplied to the separating roller (38) and the fibres are sucked away out of the separating-roller housing (46) by way of a suction opening, at a pre-determined time the pressure in the compressed-air line is reduced at least slightly and the valve (1) is thereby suddenly opened, and by opening the valve (1) the fibres are suddenly supplied to the rotor, and the reduction in pressure in the compressed-air line is synchronized with the introduction of the thread end into the rotor.

2. A method according to Claim 1, **characterized in that** the valve (1) is suddenly opened by air being removed from the valve (1) ) by a rapid air-removing device.

3. A method according to Claim 1 or 2, **characterized in that** the beginning of the suction of the rotors is synchronized with the end of the suction through the suction opening in the separating-roller housing (46).

4. A method according to Claim 3, **characterized in that** the suction of the rotor is released at the same time or earlier than the suction through the suction opening in the separating-roller housing (46) is interrupted.

## Revendications

1. Procédé pour l'amorçage de filage dans un dispositif à filer à fibres libérées comportant un rotor disposé dans un carter (35) de rotor et un briseur (38) individualisant un ruban (41) de fibres et qui est disposé dans un carter (46) de briseur, une conduite (21) à dépression qui est en liaison avec le carter (35) de rotor, une soupape (1), caractérisé en ce qu'avant l'amorçage de filage une aspiration du rotor est interrompue par le fait que la soupape (1) est fermée pneumatiquement par augmentation de la pression dans une conduite d'air comprimé commandant la soupape (1), en ce qu'ensuite une extrémité de fil est introduite dans le rotor et qu'un ruban de fibres est transporté vers le briseur (38) et que les fibres sont aspirées du carter (46) de briseur, à travers un orifice d'aspiration, en ce qu'à un moment prédéterminé la pression dans la conduite d'air comprimé est diminuée au moins légèrement par quoi la soupape (1) est ouverte brusquement et en ce que par l'ouverture de la soupape (1) les fibres sont transportées brusquement vers le rotor et que la diminution de la pression dans la conduite d'air comprimé est synchronisé avec l'introduction de l'extrémité de fil dans le rotor.

2. Procédé selon la revendication 1, caractérisé en ce que l'ouverture brusque de la soupape (1) est obtenue par suite d'une purge rapide de la soupape (1).

3. Procédé selon la revendication 1 ou 2, caractérisé en ce que le début de l'aspiration du rotor est synchronisé avec la fin de l'aspiration à travers l'orifice d'aspiration prévu dans le carter (46) de briseur.

4. Procédé selon la revendication 3, caractérisé en ce que l'aspiration du rotor est libérée en même temps ou plus tôt que l'aspiration à travers l'orifice d'aspiration dans le carter (46) de briseur est interrompue.
